# EUROPEAN PATENT SPECIFICATION

(11) **EP 1 709 109 B1**
(45) Date of publication and mention of the grant of the patent: **03.05.2017**
(21) Application number: 04815923.0
(22) Date of filing: 28.12.2004
(51) Int. Cl.: C08J 5/24, C08J 5/04

(54) **STABILIZABLE PREFORM PRECURSORS AND STABILIZED PREFORMS FOR COMPOSITE MATERIALS AND PROCESSES FOR STABILIZING AND DEBULKING PREFORMS**
STABILISIERBARE VORFORMVORLÄUFER UND STABILISIERTE VORFORMEN FÜR VERBUNDWERKSTOFFE UND VERFAHREN ZUR STABILISIERUNG UND KOMPAKTIERUNG VON VORFORMEN
PRECURSEURS DE PREFORMES STABILISABLES ET PREFORMES STABILISEES POUR MATERIAU COMPOSITE ; PROCEDES DE STABILISATION ET DE COMPACTAGE

(30) Priority: 26.01.2004 GB 0401645
(43) Date of publication of application: 11.10.2006
(73) Proprietor: CYTEC TECHNOLOGY CORP., Wilmington, Delaware 19801 (US)
(72) Inventor: LO FARO, Carmelo, I-95037 San Giovanni La Punta (IT); ALDRIDGE, Matt, Buckley Flintshire CH7 2QS (GB)
(74) Representative: Vande Gucht, Anne
(86) International application number: PCT/US2004/043933
(87) International publication number: WO 2005/075543

(56) References cited:
- EP-A- 0 156 559
- WO-A-02/16481
- US-A- 4 410 385
- PEDERSON, C; LO FARO, C; ALDRIDGE, M; MASKELL, R: "Epoxy-soluble thermoplastic fibers: enabling technology for manufacturing high toughness structures by liquid resin infusion" SAMPE JOURNAL, vol. 39, no. 4, July 2003 (2003-07), - August 2003 (2003-08) pages 22-28, XP009046156

## Description

### Field of the Invention

The present invention relates to preforms and processes for preparing preforms for composite material manufacture and more particularly to stabilizable preform precursors, stabilized preforms and processes for stabilizing and debulking preforms.

### Background of the Invention

Composites are traditionally made using prepregs made up of fiber reinforcements or structural fabrics impregnated with a matrix resin. Sheets of prepreg may be cut to size for laying up and molding and laminating in the construction of a given composite article. Prepreg properties and resulting part quality can be controlled to manipulate resulting part properties such as toughness, strength and flexibility.

More recently, composites are made utilizing various liquid molding processes that involve resin infusion technologies, examples of which include Resin Transfer Molding (RTM), Liquid Resin Infusion (LRI), Vacuum Assisted Resin Transfer Molding (VARTM), Resin Infusion with Flexible Tooling (RIFT), Vacuum Assisted Resin Infusion (VARI), Resin Film Infusion (RFI), Controlled Atmospheric Pressure Resin Infusion (CAPRI), VAP (Vacuum Assisted Process) and Single Line Injection (SLI) in which dry fibers are first arranged in a mold as a preform and then injected or infused directly in-situ with matrix resins. When the preform, consisting of one or more layers or plies of dry oriented fiber material that are assembled in a stack is placed in the mold, the layers or plies are typically held in place ("stabilized") and compacted ("debulked") by stitching, stapling or bonding using binders to maintain the alignment and stabilize the fabric to prevent fraying or the pulling apart of the dry oriented fiber material during storage, transport and handling and when it is placed in the mold.
The stack is then cut outside of the stitching or stapling to a desired shape and the preform is then placed in a mold and resin injected to impregnate the fabric and then cured by ordinary and accepted procedures to provide a finished composite article.

The stitching and stapling methods for preform stabilization however, are typically limited as the preform cannot be shaped to conform to a complex part's contour without disturbing the stitching or stapling. The stitches are typically of polymers that remain in situ until temperatures that can go as high as 230°C and are not soluble in the resin, so that the stitching remains intact even post cure. These methods are also quite labor intensive, increasing the cost to produce the shaped part. Moreover, the stitches or staples tend to form pockets or pores within the part that prevent resin infiltration, reducing part properties, particularly strength. In addition, stitching usually requires piercing the fiber with a needle which has the result of reducing part properties, particularly in-plane strength. Elevated temperature properties of the part can also be reduced when the fiber stitch absorbs moisture. The difference in CTE between the stitching thread and the resin and the poor wetting of the insoluble thread can also cause microcracking.

Another method for stabilizing preforms involves applying a hot melt adhesive on the layers to hold them together, as for example as shown in U.S. Patent No. 5,217,766 to Flonc et al. Usually, in this type of process, the dry fabric is coated in limited areas with a thin layer of liquefied thermoplastic polymer or alternatively, a fibrous thermoplastic polymer is placed between the layers and high heat is applied to melt the adhesive, since it will not dissolve. The preform is then contoured to conform to the complex shape by melting and refreezing the polymer by the selective application and removal of a hot iron. This is of course a very labor intensive process and thus quite costly. Moreover, the thermoplastic polymer used as the adhesive typically fails to sufficiently wet the fibers to hold the adjacent layers together to maintain a shape after forming. Thus, if the preform is handled, such as during loading into the mold, it is possible that the layers will shift. Also, as with stitches and staples, since the adhesive is not compatible with resin systems typically used to produce parts via resin infusion processes the thermoplastic adhesive forms pockets within the part that prevent resin infiltration, reducing part quality properties.

Thermosetting or thermoplastic binder resins are also known to be effective in aiding the production of the preform. The binder holds the fibers in position during the injection or infusion of matrix resin, which may have relatively high viscosity requiring pressurised injection which may result in local displacement or an unstabilized preform.

Commercially available binder systems include either thermoset epoxy based systems alone or in combination with a polyester thermoplastic resin component. More recently commercially available systems are based on an epoxy thermoset with a polyethersulphone thermoplastic resin component, or a bismaleimide thermoset with a polyetherimide thermoplastic resin component.

The commercially available binders are applied by spray technique, as a film or as a powder binder system. They are applied to either fibers or fabric sheets prior to or during the assembly of the fiber form, or applied to the fiber form. The binder is usually the corresponding resin matrix system including a curing agent or catalyst, which has been advanced (i.e. partially cured) in order to form a solid powder and which can partially impregnate and penetrate the fiber tows. The systems which include an amount of a curing catalyst or a highly reactive resin suffer from a number of intrinsic problems. The advanced binder resin introduces a number of storage problems whereby the partly cured composition is not readily flexible, and is subject to developing stresses during storage which can result in debonding of the preform. Therefore these products can typically only be used within a very short period after production. The commercially available systems moreover require heating of the preform to melt the binder resin powder and obtain properties of tack which serve to produce the preform.

U.S. Patent Nos. 4,992,228 and 5,080,857 disclose alternative systems based respectively on thermoplastic resin in the absence of cross linker and on thermoset resin in the absence of catalyst. In each, heat is used to tack and produce the fiber preform, to avoid the formation of pockets of binder which inhibit matrix resin permeation and lower the finished article's strength, glass transition temperature and other properties. Nevertheless, these systems suffer from poor flow properties and deformation, poor flow control and resistance to deformation, poor compatibility with matrix resin, low toughness and the like.
There are also several examples of known flow enhancing fabrics in which non structural fibers, for example nylon or polyester, are used. However, all these technologies are based on insoluble fibers that stay in the composite after cure, thus having a detrimental effect on the mechanical and thermal properties of the composite.

Moreover, commercial binder systems presently on the market for stabilizing preforms only offer the potential of acting as a processing aid. That is, at worst they negatively affect, and at best they do not affect properties of the finished composite. Negative effects typically seen with these known binders include porosity and dry spots in the preform leading to a reduction in mechanical properties, particularly hot wet properties and thermal instability of the preform at processing temperatures. U.S. Patent No. 5,432,010 to Ko, et al. discloses such a binder system that is however said to avoid reduction in mechanical properties by using a powdered binder resin that is supposed to be compatible with the matrix resin system for the preform. However, since this binder resin is a powder, it has the disadvantage of being extremely difficult to handle and to ensure uniform distribution of the binder resin on and between fabric layers.

There is therefore a need for stabilizable preform precursors, stabilized preforms and methods for stabilizing and debulking preforms that enhance both the processing properties such as prepreg permeability to resin, stability, resistance to fraying, unraveling, etc. and the resultant composite properties such as toughness and Fire Smoke and Toxicity (FST), thereby increasing compression strength after impact (CSAI) values.

The aforementioned needs have so far been fulfilled by separate technologies but have not been combined in one encompassing technology or product.

### Summary of the Invention

The present invention solves the aforementioned and other problems by providing stabilizable preform precursors and stabilized preforms that comprise stabilizing fibers such as thermoplastic fibers that can be integrated, for example woven, into a fibrous substrate reinforcement along with the structural fibers thereby stabilizing any resultant preform and additionally increasing the permeability of the reinforcement to the infusing resin. As the stabilizing fibers of the present invention are adapted to completely dissolve in the liquid resin matrix, reduction of mechanical properties is avoided and instead improved, particularly mechanical properties such as toughness, Fire Smoke and Toxicity, and impact resistance.

The fibres differ from particles as they are not washed away by the infused resin.

The present invention also provides for preforms and preform precursors that can be formed into a desired shape prior to curing, while concurrently offering improvements in both preform edge quality, handling characteristics, and maintaining fibre reinforcement alignment and orientation.

Additionally, using the present invention during the compression and heating steps of composite part manufacture substantially debulks the layers to partially consolidate the layers. Debulking means that the layers are sufficiently compressed to partially consolidate the layers to the required thickness to ease loading into a mold. For example, when a number of fiber layers are stacked, they may occupy a volume approximately 150-200 percent of the final cured part thickness. Thus, it is difficult to place such a "bulky" preform into a net shape mold and to close the mold without disturbing the fiber orientation. Following debulking, one achieved values between 100 and 150 percent of the final cured part thickness. Utilizing the present process of compressing and stiffening the preforms prior to molding acts to debulk the preform.

As a further advantage of the present invention, the structural or reinforcing fibres of the stabilizable preform precursors and stabilized preforms of the present invention display enhanced permeability to the matrix resin as the stabilizing fibres act as channels for the resin

### Brief Description of the Drawings

Figure 1 is a schematic drawing of a woven fabric of carbon fiber reinforcement matrix having dissolvable fibers co-woven in the warp and weft directions.
Figure 2 is photograph of a fabric structure having a stabilizable fiber therein in accordance with the present invention.
Figures 3a-d are photographs showing the tensile strength of a fabric being tested on a Zwick Tensile Test Machine.
Figures 4a and 4b show an "L" shaped preform manufactured using the present invention method.
Figure 5 are flattened "book" drawings of stabilizable preform precursors.
Figure 6 shows 3 "books" cut out of a flat stack of stabilizable preform precursor according to the present invention.
Figures 7a and b show the preforms that result when the books in Fig. 6 are constructed using a forming tool.

### Detailed Description of the Invention

In one embodiment the present invention is directed to a stabilizable preform precursor for composites manufacture. The preform precursor according to the present invention comprises at least one layer or ply of a structural fabric comprised of reinforcing fibers wherein at least one of the layers or plies of structural fabric has integrated therein one or more stabilizing fiber(s). The stabilizing fiber dissolves at a dissolution temperature in a resin for infusing into the structural fabric to make the composite. The stabilizing fiber stabilizes the stabilizable preform precursor when the stabilizable preform precursor is subjected to an elevated temperature. The stabilizable preform precursor can comprise more than one layer or ply of structural fabric and can have one or more stabilizing fiber(s) integrated therein.

For purposes of the present invention, the term stabilized is used to mean both 1) the stabilization of a single sheet, layer or ply or multiple sheets, layers or plies of structural or reinforcing fabric so that it can be moved, cut, transported, resin infused, or handled in a typical manner without fraying, unravelling, pulling apart, bending, wrinkling or otherwise distorting the integrity of the structural or reinforcing fabric, 2) the stabilization and binding together of multiple layers of reinforcing or structural fabrics for cutting, molding or shaping, by placing in a mold or otherwise so that the resulting preform will not be distorted by being moved, transported or manipulated in any way and so that the fibers that make up the reinforcing or structural fabrics remain intact during resin infusion, and 3) fixing a preform in a desired shape.

For purposes of this invention, the terms inject and infuse and injecting and infusing will be used interchangeably herein and are intended to have the same meaning - the method by which resin is introduced into a fiber substrate or structural fabric for composite part manufacture.

In a preferred embodiment, the stabilizable preform precursor has at least every other layer of structural fabric having integrated therein one or more stabilizing fiber(s). Preferably, within each of the layers of structural fabric, the ratio of stabilizing fibers to reinforcing fibers is from about 1:99 to about 70:30, and more preferably from about 10:90 to about 30:70.

In the stabilizable preform precursor according to the present invention the structural fabric can be any type of fabric or textile structure known in the art for manufacturing composite materials made from reinforcing structural fabrics and infused liquid resins. Examples of suitable fabric types or configurations include, but are not limited to, all woven fabrics, examples of which include, but are not limited to polar weaves, spiral weaves and uniweaves; all multiaxial fabrics, examples of which include, but are not limited to multi warp knitted fabrics, non crimp fabrics (NCF) and multidirectional fabrics; knitted fabrics braided fabrics; tailored fibre placement fabrics such as for example only fibre placement and embroidered fabrics, all non-woven fabrics, examples of which include but are not limited to mat fabric, felts, veils and chopped strands mats and fabrics that are comprised of combinations thereof. The fibers that make up the reinforcing structural fabric can be any type of fiber known in the art of composites, examples of which include, but are not limited to spun strands, extruded strands, cast strands, continuous fibers, random fibers, discontinuous fibers, chopped fibers, whiskers, filaments, ribbons, tapes, veils, fleeces, hollow fibres and combinations thereof. Suitable materials from which the fibers can be made include, but are not limited to those selected from the group consisting of carbon, aramid, quartz, boron, glass, polyethylene, polybenzazole, poly (p-phenylene-2, 6-benzobisoxazole) polybenzothiazole alumina, zirconia, silicon carbide, and combinations thereof.

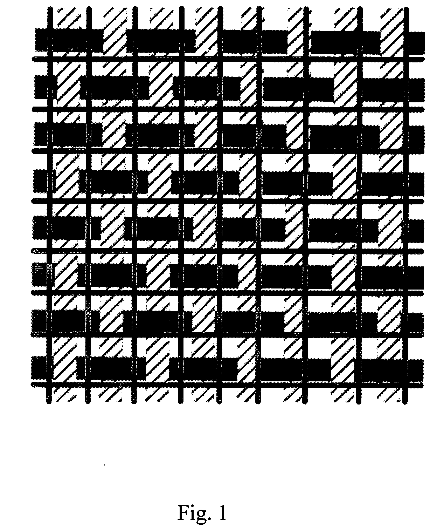

In the stabilizable preform precursor according to the present invention, the stabilizing fiber can, like the reinforcing fibers, be any type of fibrous material, examples of which include, but are not limited to yarns or monofilaments of spun strands, extruded strands, cast strands, continuous fibers, random fibers, discontinuous fibers, chopped fibers, whiskers, filaments, ribbons, tapes, hollow fibres, veils, fleeces, and combinations thereof. For purposes of the present invention, a stabilizing fiber refers to both yarns made up of multiple monofilaments, and single or multiple monofilaments. Preferably the stabilizing fiber (or yarn) comprises fibers each having a diameter less than or equal to about 100 micron. The stabilizing fiber can be integrated or inserted into the structural fabric by any technique known in the art, preferred examples of which include, but are not limited to techniques selected from the group consisting of stitching, knitting, tufting, warp knitting crimping, punching, weaving, uniweaving, braiding, overwinding, intermeshing, commingling, aligning, twisting, coiling, knotting, threading, matting, co-weaving, spun bonding, spraying, laminating, veil thermal bonding and veil stitching and combinations thereof. In particular for a woven fabric, fibers are preferably co-woven in warp and weft alongside the carbon fibers as shown in Figure 1.

The stabilizing fiber can be comprised of any polymer that has the ability to at least partially and preferably completely dissolve, (as opposed to melt) in a resin for infusing into the preform to manufacture the composite. Such dissolution should preferably occur at a dissolution temperature below that of the cure temperature for the resin. Preferably, the stabilizing fiber in the present invention is selected from the group consisting of rubber, elastomeric polymers, thermoplastic polymers and combinations thereof. Preferably, the polymer is a thermoplastic polymer and more preferably it is an amorphous thermoplastic polymer or a crystalline polymer having a relatively low melting point.

More preferably, the stabilizing fiber comprises a thermoplastic polymer preferably having a number molecular weight from about 1000 to about 60,000, more preferably (Mn) in the range of from about 2,000 to about 20,000. Examples of suitable thermoplastic polymers include, but are not limited to members of the group consisting of cellulose derivatives, polyester, polyamide, polyimide, polycarbonate, polyurethane, poly(methyl methacrylate), polystyrene, polyaromatics; polyesteramide, polyamideimide, polyetherimide, polyaramide, polyarylate, polyacrylat, poly(ester) carbonate, poly(methyl methacrylate/butyl acrylate), polysulphone, polyethersulphone, polyetherethersulphone polyethersulphone-etherketone, and copolymers and combinations thereof.

A particularly preferred polyaromatic for use as the stabilizing fiber in the present invention preform is a polyaromatic sulphone comprised of ether-linked repeating units or thioether-linked repeating units, the units being selected from the group consisting of

- (PhAPh)ₙ-

and

- (Ph)ₐ-

wherein A=CO or SO₂, Ph is phenylene, n = 1 to 2 and can be fractional, a = 1 to 4 and can be fractional, with the proviso that when a exceeds 1, the phenylenes are linked linearly through a single chemical bond or a divalent group other than -CO- or -SO₂- or are fused together directly or via a cyclic moiety selected from the group consisting of an acid alkyl group, a (hetero) aromatic, a cyclic ketone, a cyclic amide, an imide, a cyclic imine and combinations thereof. Preferably, the polyaromatic sulphone comprises polyethersulphone (PES) and more preferably, a combination of polyethersulphone-etherketone and of polyether ether sulphone linked repeating units (PES:PEES), in which the phenylene group is meta- or para-; wherein the phenylenes are linked linearly through a single chemical bond or a divalent group other than sulphone, or are fused together. The preferred relative proportions of the repeating units of the polyarylsulphone in the PEES:PES may be expressed in terms of the weight percent SO₂ content defined as 100 times (weight of S0₂)/(weight of average repeat unit). The preferred SO₂ content is at least about 35, more preferably at least about 30 and most preferably at least about 22%. When a = 1 this corresponds to PES/PEES ratio of at least 20:80, preferably in the range 25:75 to 75:25 and most preferably 35:65 to 65:35.

Alternatively, when the thermoplastic polymer for use as the stabilizing fiber is polyurethane, it is more preferably a thermoplastic polyurethane rubber and when the stabilizing fiber is a polyacrylate, the polyacrylate is at least 85 wt% acrylonitrile. When the thermoplastic polymer is a polyamide, it is preferably a nylon material and more preferably an amorphous nylon.

In the present stabilizable preform precursor the resin for infusing into the resultant preform to manufacture the composite part can be any suitable resin known for use in the art that is preferably a liquid or a paste at ambient temperatures and is preferably selected in conjunction with the selection of material for use as the stabilizing fiber so as to completely dissolve the stabilizing fiber when elevated to a temperature that is less or equal than the curing temperature for the resin. Thermosetting resins are particularly preferred. Examples of thermosetting resins suitable for the invention include, but are not limited to members of the group consisting of epoxy resin, addition-polymerisation resin, bis-maleimide resin, formaldehyde condensate resin, formaldehyde-phenol resin, cyanate resin, isocyanate resin, phenolic resin and combinations thereof.

Preferably, the resin is an epoxy resin and can be selected from any known epoxy resin suitable to be infused into a reinforcing structural fabric for composite manufacture. Methods and procedures for manufacturing such resins are well known in the art. Suitable epoxy resins include, but are not limited to epoxy resins selected from the group consisting of N,N,N'N'-tetraglycidyl diamino diphenylmethane, N,N,N',N-tetraglycidyl-bis(4-aminophenyl)-1,4-diiso-propylbenzene, N,N,N',N'-tetraglycidyl-bis(4-amino-3,5-dimethylphenyl)- 1,4-diisopropylbenzene, triglycidyl ethers of p-aminophenol, 2,2-bis(4,4'-dihydroxy phenyl) propane, Novolak resins, glycidyl ethers of phenol Novolak resins, diglycidyl 1,2-phthalate, diglycidyl derivative of dihydroxy diphenyl methane, diglycidyl ether of bisphenol A and diglycidyl ether of bisphenol F and combinations thereof.

The stabilizable preform precursor according to the present invention in a preferred embodiment comprises a stabilizing fiber that is a polyaromatic thermoplastic and a resin that is an epoxy resin.

In another embodiment the present invention comprises a stabilized preform. The stabilized preform according to the present invention comprises a stabilizable preform precursor according to the present invention comprising all of its characteristics and features, that has been subjected to a stabilizing temperature that is preferably suitable to soften the stabilizing fiber and is most preferably of from about 100°C to about 250°C for a time period from about 5 minutes to about 100 minutes.

The stabilized preform according to the present invention can typically comprise more than one layer of structural fabric. The layers or plies of structural fabric have been stacked, cut and shaped prior to having been subjected to a stabilizing temperature of from about 100°C to about 250°C for a time period of from about 5 minutes to about 100 minutes.

The present invention also comprises a process for stabilizing a preform precursor comprised of reinforcing fibers for composite material manufacture. The process in its broadest aspect comprises the steps of providing at least one layer of a structural fabric comprised of reinforcing fibers,
integrating into at least one layer of structural fabric at least one stabilizing fiber that dissolves in a resin for infusing into structural fabric to manufacture the composite, and applying heat to the structural fabric having the stabilizing fiber integrated therein for a period of from about 5 minutes to about 100 minutes.

In the present process the heat can be applied in any manner and from any source, preferred examples including, but not being limited to heat sources selected from infrared, microwave, convection, induction, ultrasonic, radiant and combinations thereof. The heat should preferably be applied in an amount that is sufficient to soften the stabilizing fiber and most preferably at a temperature of from about 80°C to about 250°C. More preferably the heat is applied at a temperature of from about 100°C to about 210°C for a time period of from about 5 min to about 200 min and most preferably at a temperature of from about 125°C to about 185°C for a time period of from about 10 min to about 100 min. The step of applying heat can be performed under a vacuum of from about 500 mbar to about 999 mbar or under pressure applied by using a press, nip rollers and the like.

Optionally, in the present process for stabilizing a preform more than one layer of structural fabric can be provided. The process can then further comprise the steps of stacking and cutting the layers or plies of structural fabric after the step of integrating the stabilizing fiber into the structural fabric and before the step of applying heat. The present process can optionally further comprise the step of shaping the layers of structural fabric after the layers have been stacked and cut and before the step of applying heat

In the present process, the step of integrating the stabilizing fiber into the structural fabric can be carried out by using any known method for integrating or incorporating a fiber into a structural fabric, preferred examples of which include a method selected from stitching, knitting, crimping, tufting, punching, uniweaving, braiding, overwinding, intermeshing, commingling, aligning, twisting, coiling, knotting, threading, matting, co-weaving, spun bonding, spraying, laminating, veil thermal bonding, veil stitching and combinations thereof.

The present invention also comprises a process for debulking a preform precursor comprised of reinforcing fibers for composite material manufacture. The process comprises the steps of providing more than one layer of a structural fabric comprised of reinforcing fibers, integrating at least one soluble fiber that dissolves in a resin for infusing into the structural fabric to manufacture the composite into at least one layer of structural fabric, stacking the layers of structural fabric having at least one soluble fiber integrated therein to a stack having a thickness a, applying heat to the stacked layers of structural fabric for a period of from about 1 minute to about 100 minutes to reduce the thickness of the stack to a value less than a. The heat is applied using any known heat source and is preferably selected from infrared, microwave, convection, induction, ultrasonic, radiant and combinations thereof. The heat is preferably applied at a temperature of from about 60°C to about 250°C, more preferably at a temperature of from about 100° to about 250°C for a time period of from about 1 min to about 200 min and most preferably at a temperature of from about 120°C to about 180°C for a time period of from about 10 min to about 100 min. The step of applying heat is preferably performed under a vacuum of from about 50 mbar to about 999 mbar or under pressure applied by using a press, nip rollers and the like.

The debulking process according to the present invention can further comprise the step of cutting the stack of structural fabric having the soluble fiber integrated therein, before carrying out the step of applying heat. The process can further comprise the step of shaping the stack of structural fabric after the step of cutting and before the step of applying heat. The step of integrating or inserting the soluble fiber into the structural fabric can be carried out by any known method, preferred methods of which include, but are not limited those selected from stitching, knitting, tufting, crimping, punching, uniweaving, braiding, overwinding, intermeshing, commingling, aligning, twisting, coiling, knotting, threading, matting, co-weaving, spun bonding, spraying, laminating, veil thermal bonding and veil stitching.

The following non-limiting examples are illustrative of the present invention and are not to be construed as to limiting the scope thereof in any manner.

### EXAMPLE 1

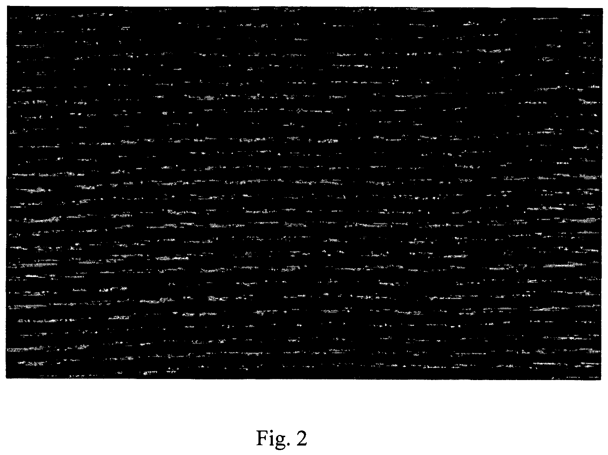

An hybrid fabric HTA 6K/ST54 5HS 370 gsm, based on HTA 6K carbon fibers (Tenax Corp. Mishima, Japan) and ST54 thermoplastic fibers (Cytec Engineered Materials, Tempe, AZ), 5HS weaving style, 370 gsm area weight and 1270 mm width is manufactured in Cytec Engineered Materials, Greenville, Texas using a Dornier rapier loom. The fabric contains HTA 6k fibers (400 tex) in the warp and weft directions, and thermoplastic fibers ST54 (54 tex) in the warp and weft directions. For each end of carbon, one end of thermoplastic is inserted in an amount that is 15% by weight of carbon fibers to produce a hybrid fabric as shown in Figure 2.

### EXAMPLE 2

Two squares of size 400 x 400 mm are cut from the hybrid fabric made in Example 1 and from a standard carbon fabric HTA 6k 5HS 370 gsm based on HTA 6K carbon fibers (Tenax Corp. Mishima, Japan), 5HS weaving style, 370 gsm area weight and 1270 mm width

| *Fabric* | *Sample description* | *Details* |
|---|---|---|
| 1 | HTA 6k 5HS 370 gsm | Standard Carbon fabric |
| 2 | HTA 6K/ST54 5HS 370 gsm | Hybrid fabric with 1:1 54 tex thermoplastic yarn:400 tex carbon distribution in warp and weft |

The samples are placed in an oven and submitted to the following conditions:

| Sample | Fabric | Vacuum | Temperature (°C) | Time at temperature (min) |
|---|---|---|---|---|
| A | 1 | No | 180 | 10 |
| B | 1 | Yes | 180 | 10 |
| C | 2 | No | 180 | 10 |
| D | 2 | Yes | 180 | 10 |

| | | | | |
|---|---|---|---|---|
| Vacuum is around 980 mbar. | | | | |

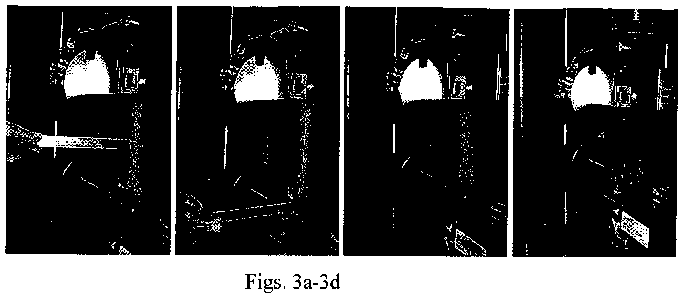

Following this procedure, the strength of the fabric in +/- 45 directions is measured using a Zwick Tensile Test machine as shown in Figs. 3a-3d and the results are reported in the following table.

| Sample | Load (N) |
|---|---|
| A | <0.1 |
| B | <0.1 |
| C | 1.8 |
| D | 2.5 |

### EXAMPLE 3

Two preformed panels are produced using a 400 x 400 mm sample cut from a HTA 6K/ST54 5HS 370 gsm fabric obtained in Example 1. One panel is heated at 160°C for 10 minutes, the other is heated at 180°C for 10 minutes, both under a vacuum bag, wherein the vacuum is 900 mbar

An established tack test is used to perform a Mode I type peel test on 5 preform coupons of 4 plies taken from both preform panels, at 25 mm width. The results are reported in the following table.

### Average Tack force (N)

| | Preforming Condition | |
|---|---|---|
| | 10 mins @ 160°C | 10 mins @ 180°C |
| Test 1 | 1.45 | 3.48 |
| Test 2 | 1.39 | 3.85 |
| Test 3 | 1.58 | 3.64 |
| Test 4 | 1.42 | 3.22 |
| Test 5 | 1.56 | 3.25 |

### EXAMPLE 4

The hybrid fabric HTA 6K/ST54 5HS 370 gsm fom Example 1 is cut into 12 rectangular layers of size 210 x 150mm. The layers are stacked together in a quasi-isotropic lay-up [-45,0, 45,90]₃.

In order to build a preform, the stack of 12 plies is laid on an L shaped tool, vacuum bagged, heated at 180 C and left at that temperature for 20 minutes.

Following debagging the plies maintained the L shape and no significant spring-back is observed.

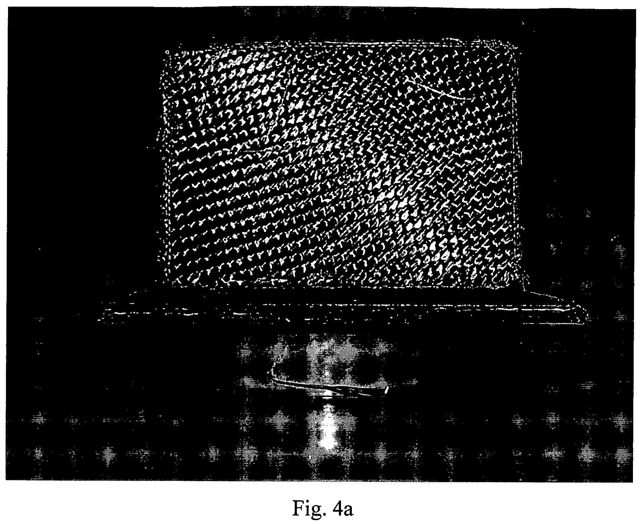

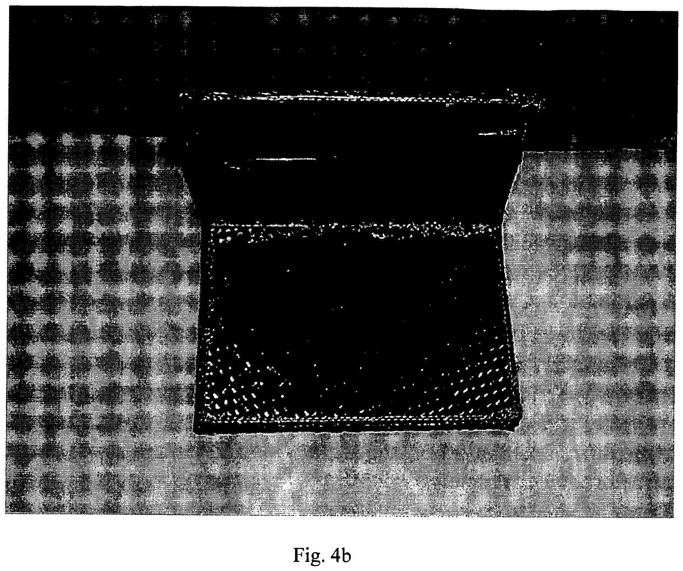

Figures 4a and 4b show the L preform manufactured using the method described.

### EXAMPLE 5

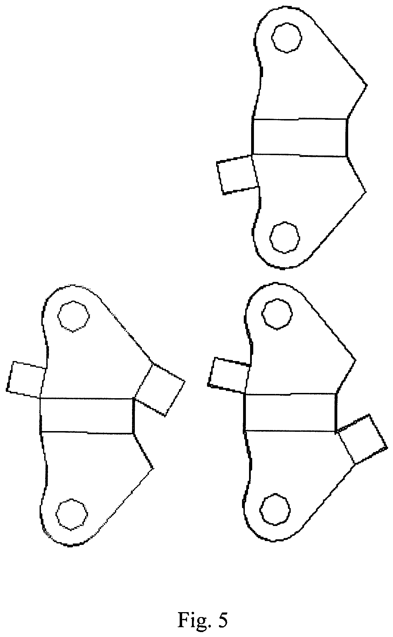

A complex preform is produced starting from flattened "book" drawings as set forth in Figure 5.

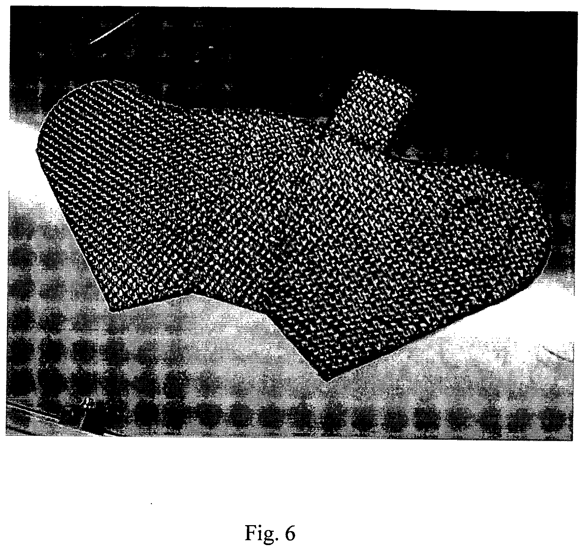

The 3 `books' comprised of 4 plies with a quasi-isotropic layup [-45,0, 45,90] are cut out of a flat stack of HTA 6K/ST54 5HS 370 gsm fabric as shown in Figure 6.

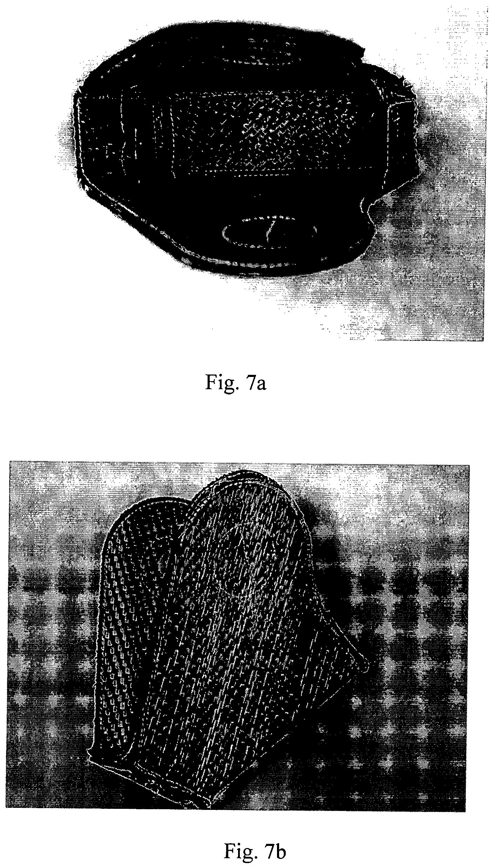

The books are constructed using a forming tool. The tool is heated at 180°C and left at that temperature for 20 minutes. The resulting preform as shown in Figures 7a and 7b are observed to have excellent stiffness and stability and virtually no spring-back effects.

### EXAMPLE 6

Two preforms are manufactured using a standard fabric and a fabric containing stabilizing fibers only in the weft direction. The preforms are made of 6 layers and the achieved carbon fiber volume fraction is measured to be about 59%. The permeability of the reinforcement is measured using a permeameter consisting of a pressure pot and a mold in which sensors are embedded.

The upper mold half, with sensors, is clamped onto the lower mold half with a clamping pressure of 6 bars. The injection pressure is raised to 0.4 MPa and kept constant during the test. The permeability values are reported in the table below:

| System | K1*10-12 | K2*10-12 | K2/K1*10-12 |
|---|---|---|---|
| | (m²) | (m²) | (m⁴) |
| HTA 6k 5H 370 | 7.3 | 4.8 | 0.61 |
| HTA 6K/ST54 5HS 370 | 16.2 | 10.4 | 0.65 |

The results show that the permeability of the fabric containing stabilizing fibers is higher than the permeability of the standard fabric.

### EXAMPLE 7

A preform is manufactured by heating 6 plies of HTA 6K/ST54 5HS 370 obtained in Example 1 at 170°C for 10 min under vacuum. An injection trial is performed using Plastech TT injection equipment with Plastech high temperature glass topped tool. Injection parameters are as established for non-preformed hybrid fabric to allow direct comparison. Ease of processing is similar to that of non-preformed hybrid fabric in terms of fill rate. All injection parameters are shown graphically in Figure 8.

Optical microscopy of the laminate shows a homogenous matrix with no evidence of internal porosity or surface cavitation. Mechanical data is generated as detailed in the table that immediately follows below, and shows no loss in performance compared to that seen using non-preformed laminates.

| Property (unit) | Test Method | Orientation | Condition | Non-preformed | Preformed |
|---|---|---|---|---|---|
| ILSS (MPa) | EN 2563 | Weft | Dry/RT | 65.2 | 64.5 |
| ILSS (MPa) | EN 2563 | Weft | Boiled/12 0C | 37.6 | 40.3 |
| Comp st (MPa) | EN 2850 B | Weft | Dry/RT | 680 | 759 |
| Comp st (MPa) | EN 2850 B | Weft | Boiled/12 0C | 507 | 471 |
| Tg (C) | DMA | Warp | Dry | 199 | 213 |
| Tg (C) | DMA | Warp | Boiled | 146 | 167 |
| Water uptake(%) | Internal | n/a | 48 hour boil | 0.8 | 0.8 |

| | | | | | |
|---|---|---|---|---|---|
| Note: compressive strength normalised to fiber volume fraction of 0.55 | | | | | |

The data show that the stabilizing method does not cause any significant reduction in mechanical performance.

### EXAMPLE 8

CSAI panels are manufactured using HTA 6K/ST54 5HS 370 obtained from Example 1. Compression strength is measured following a 25 J impact. Data are compared with the resin system RTM6 (Hexcel Composites, Duxford UK) using comparable fabric.

| System | Spec | Impact (J) | Condition | CAI (MPa) |
|---|---|---|---|---|
| Soluble fiber | AITM 1.0010 | 25 | Dry | 273 |
| RTM6 | AITM 1.0010 | 25 | Dry | 219 |

The data shows greatly improved compression strength after impact for the stabilized system.

### EXAMPLE 9

A hybrid woven non crimp fabric G40-800 24k/ST54 550 gsm, based on G40-800 24K carbon fibers (Tenax Corp. Mishima, Japan) and ST54 thermoplastic fibers (Cytec Engineered Materials, Tempe, AZ), biaxial orientation (0/90), 275 gsm area weight per axis layer, 550 gsm area weight total and 1270 mm width is manufactured for Cytec Engineered Materials, Tempe, AZ. The fabric contains G40-800 24k fibers (820 tex) in the warp and weft directions, and thermoplastic fibers ST54 (54 tex) in the warp and weft directions. For each end of carbon, two ends of thermoplastic fiber are inserted in an amount that is 15% by weight of carbon fibers to produce a hybrid fabric.

The thermoplastic fiber insertion is controlled in warp through the loom reed, while in weft by the pick insertion ratio. The thermoplastic yarn forms a 5 Harness Satin weaving style holding the carbon layers together.

### EXAMPLE 10

The hybrid woven non-crimp fabric G40-800 24k/ST54 550 gsm shown in examle 1 is cut in a 400 mm x 300 mm rectangular shape and draped over a rubber tool showing double curvature. The darped layer is subjected to 160°C for a duration of 30 minutes under a vacuum bag reacing pressures of 800 mbar.

Following debagging, the resulting stabilised draped layer shows edge and geometric stability as well as lack of wrinkles or fiber misalignment.

### EXAMPLE 11

The hybrid woven non-crimp fabric G40-800 24k/ST54 550 gsm shown in examle 1 is cut in two 200 mm x 150 mm rectangular shapes and overlapped to each other over a width of 40 mm. The overlapped layers are subjected to 160°C for a duration of 30 minutes under a vacuum bag reacing pressures of 800 mbar.

Following debagging, the resulting layers are stabilised and the compacted overlap provides a joint between the two layers showing optimal handling strength.

### EXAMPLE 12

The hybrid fabric HTA 6K/ST54 5HS 370 gsm fom Example 1 is stabilised at 160°C for a duration of 15 minutes. The fabric edge is then cut with an oscillating knife and the resulting edge does not fray nor do the fibers in the proximity lose alignment.

A standard fabric HTA 6k 5H was submitted to the same process and the quality of the edge was very poor.

## Claims

1. A process for debulking a preform precursor, which preform precursor comprises reinforcing fibers, for composite material manufacture, said process comprising the steps of:
providing more than one layer of a structural fabric comprised of reinforcing fibers,
integrating into at least one layer of structural fabric at least one soluble fiber that dissolves in a resin at a temperature that is equal to or less than a curing temperature of the resin, the resin suitable for infusing into said structural fabric to manufacture the composite,
stacking said layers of structural fabric having at least one soluble fiber integrated therein to a stack having a thickness "a",
applying heat to said stacked layers of structural fabric, with or without applied pressure, having integrated therein at least one softening soluble fiber for a period of from about 1 minute to about 200 minutes to cause softening of the soluble fiber and to reduce the thickness of the stack to less than "a";
wherein more than one layer of structural fabric has integrated therein one or more soluble fiber(s).

2. A process according to claim 1, wherein at least every other layer of structural fabric has integrated therein one or more soluble fibers.

3. A process according to claim 1 or claim 2, wherein within each layer of structural fabric, the ratio of soluble fibers to reinforcing fibers is from 1:99 to 70:30, preferably from 10:90 to 30:70.

4. A process according to claim 1, wherein the soluble fiber is selected from the group consisting of rubber, elastomeric polymers, thermoplastic polymers and combinations thereof.

5. A process according to claim 1, wherein the soluble fiber comprises a thermoplastic polymer selected from the group consisting of cellulose derivatives, polyester, polyamide, polyimide, polycarbonate, polyurethane, poly(methyl methacrylate), polystyrene, polyaromatics; polyesteramide, polyamideimide, polyetherimide, polyaramide, polyarylate, polyacrylate, poly(ester) carbonate, poly(methyl methacrylate/butyl acrylate), polyethersulphone, polyetherethersulphone, polyethersulphone-etherketone, and copolymers and combinations thereof.

6. A process according to claim 6, wherein the polyaromatic is a polyaromatic sulphone comprised of ether-linked repeating units or thioether-linked repeating units, the units being selected from the group consisting of
-(PhAPh)ₙ₋
and
-(Ph)ₐ₋
wherein A=CO or S0₂, Ph is phenylene, n = 1 to 2 and can be fractional, a = 1 to 4 and can be fractional, with the proviso that when a exceeds 1, the phenylenes are linked linearly through a single chemical bond or a divalent group other than -CO- or -SO2- or are fused together directly or via a cyclic amide, imide, a cyclic moiety selected from the group consisting of an acid alkyl group, a (hetero) aromatic, a cyclic ketone, a cyclic amide, imide, a cyclic imine and combinations thereof.

7. A process according to claim 5, wherein the resin is selected from the group consisting of epoxy resin, addition-polymerisation resin, bis-malemide resin, formaldehyde condensate resin, formaldehyde-phenol resin, cyanate resin, isocyanate resin, phenolic resin and combinations thereof.

8. A process for stabilizing a preform precursor comprised of reinforcing fibers for composite material manufacture, said process comprising the steps of :
providing a plurality of layers of a structural fabric comprised of reinforcing fibers,
integrating into said more than one layer of structural fabric at least one stabilizing fiber that dissolves in a resin at a temperature that is equal to or less than a curing temperature of the resin, the resin suitable for infusing into said structural fabric to manufacture the composite,
at least one step of applying heat to said structural fabric having integrated therein said at least one stabilizing fiber for a period of from about 1 minute to about 200 minutes, thereby softening the soluble fiber.

9. A preform precursor obtainable by a process according to any preceding claim.

## Patentansprüche

1. Verfahren zum Verdichten eines Vorform-Vorprodukts, welches Vorform-Vorprodukt Verstärkungsfasern umfasst, für die Verbundmaterialherstellung, wobei das Verfahren die Schritte umfasst:
Bereitstellen mehr als einer Schicht eines Strukturgewebes, das aus Verstärkungsfasern besteht,
Integrieren wenigstens einer löslichen Faser, die sich bei einer Temperatur in einem Harz löst, die gleich oder niedriger als die Härtungstemperatur des Harzes ist, in wenigstens eine Schicht von Strukturgewebe, wobei das Harz zum Infundieren in das Strukturgewebe zum Herstellen des Verbundstoffs geeignet ist,
Stapeln der Schichten von Strukturgewebe, die wenigstens eine lösliche Faser darin integriert aufweisen, zu einem Stapel mit der Dicke "a",
Anwenden von Wärme mit oder ohne Druckanwendung an die gestapelten Schichten von Strukturgewebe, die wenigstens eine weichmachende lösliche Faser darin integriert aufweisen, über einen Zeitraum von etwa 1 Minute bis etwa 200 Minuten, um Erweichen der löslichen Faser zu bewirken und die Dicke des Stapels auf kleiner als "a" zu verringern;
wobei mehr als eine Schicht von Strukturgewebe eine oder mehrere lösliche Faser(n) darin integriert aufweist.

2. Verfahren gemäß Anspruch 1, wobei wenigstens jede zweite Schicht von Strukturgewebe eine oder mehrere lösliche Fasern darin integriert aufweist.

3. Verfahren gemäß Anspruch 1 oder Anspruch 2, wobei innerhalb jeder Schicht von Strukturgewebe das Verhältnis von löslichen Fasern zu Verstärkungsfasern von 1:99 bis 70:30 beträgt, vorzugsweise von 10:90 bis 30:70.

4. Verfahren gemäß Anspruch 1, wobei die lösliche Faser ausgewählt ist aus der Gruppe bestehend aus Kautschuk, elastomeren Polymeren, thermoplastischen Polymeren und Kombinationen davon.

5. Verfahren gemäß Anspruch 1, wobei die lösliche Faser ein thermoplastisches Polymer ausgewählt aus der Gruppe bestehend aus Cellulosederivaten, Polyester, Polyamid, Polyimid, Polycarbonat, Polyurethan, Poly(methylmethacrylat), Polystyrol, Polyaromaten, Polyesteramid, Polyamidimid, Polyetherimid, Polyaramid, Polyarylat, Polyacrylat, Poly(ester)carbonat, Poly(methylmethacrylat/butylacrylat), Polyethersulfon, Polyetherethersulfon, Polyethersulfonetherketon und Copolymeren und Kombinationen davon umfasst.

6. Verfahren gemäß Anspruch 6, wobei der Polyaromat ein polyaromatisches Sulfon ist, bestehend aus etherverknüpften Wiederholungseinheiten oder thioetherverknüpften Wiederholungseinheiten, wobei die Einheiten ausgewählt sind aus der Gruppe bestehend aus
-(PhAPh)ₙ-
und
-(Ph)ₐ-
wobei A = CO oder SO₂, Ph Phenylen ist, n = 1 bis 2, das fraktionell sein kann, a = 1 bis 4, das fraktionell sein kann, mit der Maßgabe, dass, wenn a größer als 1 ist, die Phenylene linear durch eine einzelne chemische Bindung oder eine von -CO- und -SO₂- verschiedene zweiwertige Gruppe verknüpft sind oder direkt oder über eine cyclische Einheit ausgewählt aus der Gruppe bestehend aus einer Säurealkylgruppe, einem (Hetero)aromaten, einem cyclischen Keton, einem cyclischen Amid, Imid, einem cyclischen Imin und Kombinationen davon miteinander verschmolzen sind.

7. Verfahren gemäß Anspruch 5, wobei das Harz ausgewählt ist aus der Gruppe bestehend aus Epoxyharz, Additionspolymerisationsharz, Bismalemidharz, Formaldehydkondensatharz, Formaldehyd-Phenol-Harz, Cyanatharz, Isocyanatharz, Phenolharz und Kombinationen davon.

8. Verfahren zum Stabilisieren eines Vorform-Vorprodukts, das aus Verstärkungsfasern besteht, für die Verbundmaterialherstellung, wobei das Verfahren die Schritte umfasst:
Bereitstellen einer Vielzahl von Schichten eines Strukturgewebes, das aus Verstärkungsfasern besteht,
Integrieren wenigstens einer stabilisierenden Faser, die sich bei einer Temperatur in einem Harz löst, die gleich oder niedriger als die Härtungstemperatur des Harzes ist, in die mehr als eine Schicht von Strukturgewebe, wobei das Harz zum Infundieren in das Strukturgewebe zum Herstellen des Verbundstoffs geeignet ist,
wenigstens einen Schritt des Anwendens von Wärme an das Strukturgewebe, das die wenigstens eine stabilisierende Faser darin integriert aufweist, über einen Zeitraum von etwa 1 Minute bis etwa 200 Minuten, um dadurch die lösliche Faser weich zu machen.

9. Vorform-Vorprodukt, erhältlich durch ein Verfahren gemäß einem der vorstehenden Ansprüche.

## Revendications

1. Procédé de compactage d'un précurseur de préforme, ledit précurseur de préforme comprenant des fibres de renforcement, pour la fabrication d'un matériau composite, ledit procédé comprenant les étapes qui consistent à :
fournir plus d'une couche d'un tissu structural constitué de fibres de renforcement,
intégrer dans au moins une couche de tissu structural au moins une fibre soluble qui se dissout dans une résine à une température qui est égale ou inférieure à une température de durcissement de la résine, la résine convenant pour une imprégnation par infusion dudit tissu structural pour fabriquer le composite,
superposer lesdites couches de tissu structural dans lesquelles est intégrée au moins une fibre soluble pour produire une superposition ayant une épaisseur « a »,
appliquer de la chaleur auxdites couches empilées de tissu structural, dans lesquelles est intégrée au moins une fibre soluble de ramollissement, avec ou sans application de pression, pendant une période d'environ 1 minute à environ 200 minutes pour provoquer un ramollissement de la fibre soluble et pour réduire l'épaisseur de la superposition de telle sorte qu'elle devienne inférieure à « a » ;
dans lequel plus d'une couche de tissu structural intègre une ou plusieurs fibres solubles.

2. Procédé selon la revendication 1, dans lequel au moins une couche sur deux de tissu structural intègre une ou plusieurs fibres solubles.

3. Procédé selon la revendication 1 ou la revendication 2, dans lequel, dans chaque couche de tissu structural, le rapport des fibres solubles contre les fibres de renforcement est de 1:99 à 70:30, préférablement de 10:90 à 30:70.

4. Procédé selon la revendication 1, dans lequel la fibre soluble est sélectionnée dans le groupe constitué de caoutchoucs, de polymères élastomères, de polymères thermoplastiques, et de combinaisons de ceux-ci.

5. Procédé selon la revendication 1, dans lequel la fibre soluble comprend un polymère thermoplastique sélectionné dans le groupe constitué de dérivés de cellulose, de polyesters, de polyamides, de polyimides, de polycarbonates, de polyuréthanes, du poly(méthacrylate de méthyle), de polystyrènes, de composés polyaromatiques ; de polyesteramides, de polyamideimides, de polyétherimides, de polyaramides, de polyarylates, de polyacrylates, de carbonates de poly(ester), du poly(méthacrylate de méthyle/acrylate de butyle), de polyéthersulfones, de polyétheréthersulfones, de la polyéthersulfone-éthercétone, ainsi que de copolymères et de combinaisons de ceux-ci.

6. Procédé selon la revendication 6, dans lequel le composé polyaromatique est une sulfone polyaromatique constituée d'unités de répétition liées par des liaisons éther ou d'unités de répétition liées par des liaisons thioéther, les unités étant sélectionnées dans le groupe constitué de :
-(PhAPh)ₙ-
et de
-(Ph)ₐ-
dans lequel A est un groupe CO ou SO₂, Ph est un groupe phénylène, n vaut 1 à 2 et peut être fractionnaire, a vaut 1 à 4 et peut être fractionnaire, sous réserve que quand a est supérieur à 1, les groupes phénylène soient liés de façon linéaire par une liaison chimique simple ou par un groupe divalent autre que -CO- ou -SO₂-ou soient condensés les uns avec les autres, directement ou par l'intermédiaire d'une fraction cyclique sélectionnée dans le groupe constitué d'un groupe alkyle acide, d'un composé (hétéro)aromatique, d'une cétone cyclique, d'un amide cyclique, d'un imide, d'une imine cyclique et de combinaisons de ceux-ci.

7. Procédé selon la revendication 5, dans lequel la résine est sélectionnée dans le groupe constitué de résines époxydes, de résines produites par polymérisation par addition, de résines de bis-maléimide, de résines produites par condensation de formaldéhyde, de résines de formaldéhyde-phénol, de résines de cyanates, de résines d'isocyanates, de résines phénoliques et de combinaisons de celles-ci.

8. Procédé de stabilisation d'un précurseur de préforme constitué de fibres de renforcement pour la fabrication d'un matériau composite, ledit procédé comprenant les étapes qui consistent à :
fournir une pluralité de couches d'un tissu structural constitué de fibres de renforcement,
intégrer dans ladite plus d'une couche de tissu structural au moins une fibre de stabilisation qui se dissout dans une résine à une température qui est égale ou inférieure à une température de durcissement de la résine, la résine convenant pour une imprégnation par infusion dudit tissu structural pour fabriquer le composé,
au moins une étape d'application de chaleur audit tissu structural dans lequel est intégrée ladite au moins une fibre de stabilisation pendant une période d'environ 1 minute à environ 200 minutes, en ramollissant de ce fait la fibre soluble.

9. Précurseur de préforme pouvant être obtenu par un procédé selon l'une quelconque des revendications précédentes.
